# EUROPEAN PATENT APPLICATION

(11) **EP 2 698 238 A1**
(43) Date of publication of application: **19.02.2014**
(21) Application number: 12460074.3
(22) Date of filing: 10.10.2012
(51) Int. Cl.: B29B 17/02

(54) **Method and equipment for recovering wire from waste tires**

(30) Priority: 10.10.2011 PL 39658311
(71) Applicant: Dabski, Michal, 21-010 Leczna (PL); Dabska, Dorota, 21-010 Leczna (PL); Dabski,, Janusz, 21-010 Leczna (PL)
(72) Inventor: Dabski, Michal, 21-010 Leczna (PL); Dabska, Dorota, 21-010 Leczna (PL); Dabski,, Janusz, 21-010 Leczna (PL)

(57) **Abstract**

The method and apparatus for recovering wire from waste tires comprises the following steps: shredding devices (1) are connected via belt conveyor (2) to a granulating device (3), and the wire is separated from the remaining parts of the tire in a belt conveyor (4) equipped with a magnetic separator (5) and is later passed to a vibratory conveyor (6), where the steel is heat-treated by the system of gas burners (8) and then cleaned in a cleaning device (7) which is equipped with a casing (9) that has a number of small-diameter holes and a system of blades installed in a circular arrangement inside its casing and a rotor fitted in its interior with pivotally connected blades, which clean the wires from the adhering rubber fragments and the cleaned wires are returned to a belt conveyor (10). Then the wires are transported by way of another conveyor (11) to a hydraulic press (12) equipped with an inductor (13) which heats up the compressed material.

## Description

The method and equipment for recovering wire from waste tires.

The subject matter of this invention is the method and equipment for recovering wire from waste tires.

The existing recycling methods do not allow economically viable utilisation of the wires used for reinforcing tires in vehicles - mainly passenger cars and heavy-wheeled vehicles. The question of tire recycling is a matter of high importance, since it is vital for the protection of the natural environment due to the necessity of utilising the enormous amount of waste tires that has been accumulated so far. 290 million tires are thrown out every year in the United States alone - a fact that illustrates the magnitude of this issue. The recycling equipment used nowadays is manufactured in Europe by several companies. The Komei company in Padua, Italy, and MeWa in Geschingen, Germany, which ought to be mentioned here, deliver machines designed for cutting and grinding waste tires. Such equipment is fitted with blades which are permanently fixed to their casings, and a system of rotating blades attached to a rotor. The output material consists of rubber shreds and granulated mass, as well as steel wire which is separated from the non-metal elements of each tire by means of a magnetic separator. Currently, there are attempts to re-use the recovered steel wiring for concrete reinforcement. The research paper by C.G Papakonstantinou and M. J. Tobolski, "Use of waste tire steel beads in Portland cement concrete," published in Cement and Concrete Research, vol. 36, 2006, p. 1686-1691, indicates that the content of reinforcement wires should not exceed 4% of the entire volume of the concrete mass, and asserts that adding wire diminishes the compressive strength of the concrete, while increasing its ductility. This method of utilising recycled wires, however, is still at the lab-testing stage.

The sulphur content differs by tile element within the range between 2 and 3% (w/w). The separators used in modem tire recycling equipment deliver wires which are covered with fragments of rubber, and therefore the actual percentage of the output steel is no higher than 70% vol. It should be mentioned that the recycled wires cannot be used as scrap material in the iron industry due to the high sulphur content of the adhering rubber.

The concept behind the latest method of recovering wire from waste tires involves cutting the tires by using cutting equipment and grinding them by means of grinding devices. Afterwards, the reinforcement wires are separated from other elements of the tire and put once more into the grinding device, where the adhering rubber fragments are removed from the surface of the steel. The wires are subsequently segregated from the rubber material by means of a magnetic separator and then placed on a vibratory conveyor which is heated up by gas burners, where the steel is heat-treated. Afterwards, the wires are mechanically cleaned in a cleaning device and separated from loose non-metal elements. Finally, the wires are detached from other metal elements on a conveyor belt equipped with a magnetic drum.

A suitable recycling plant for recovering wires from waste tires is equipped with conveyors, cutting and grinding devices and magnetic separators. It consists of a network of tire cutting devices linked to a tire grinding device by means of a series of conveyor belts. The grinding device is attached to a conveyor belt fitted with a magnetic separator. The reinforcement wires which are first segregated by the magnetic separator - and stored inside the machine - are then placed on the conveyor belt once more in order to be transported back to the grinding device. Afterwards, the ground material is placed on the conveyor belt which is equipped with the magnetic separator and which is linked to the tire grinding device's outlet, whereas the freed wires are transported from the magnetic separator onto a vibratory conveyor, the surface of which is heated by a system of gas burners. Inside the vibratory conveyor, the wires are subjected to heat treatment and are mechanically cleaned afterwards by means of a cleaning device. This cleaning device is equipped with a system of blades installed in a circular arrangement inside its casing, and a number of small-diameter holes in its bottom part. The device also has a rotor fitted in its interior. This has pivotally connected blades which clean the wires from the adhering rubber fragments. Following this, the wires are returned to the conveyor belt with the magnetic separator and are segregated from the non-metal elements. Afterwards, the wires are transported by way of another conveyor to a hydraulic press equipped with an inductor which heats up the compressed material.

The method of recovering wire form scrap tires involves cutting the tires by using cutting equipment and grinding them by means of grinding devices. Afterwards, the reinforcement wires are separated from other elements of the tire and put once more into the grinding device where the adhering rubber fragments are removed from the surface of the steel. The wires are subsequently segregated from the rubber material by means of a magnetic separator and then placed on a vibratory conveyor. Inside the vibratory conveyor, the wires are subjected to heat treatment. The heat-treated wires are then mechanically cleaned by a cleaning device and separated from loose non-metal elements. Afterwards, the wires are placed on a conveyor belt equipped with a magnetic drum where they are detached from other metal elements. Finally, the wires are compressed in a hydraulic press while being simultaneously heated by means of an inductor.

This invention facilitates the recovery of wires from waste tires and enables pure steel material to be obtained from said recycled resources while ensuring that the mechanical properties of the steel make it suitable for compression in a press and, thus, of suitable density to be utilised as scrap metal and input scrap by the ironworks

The schematic process of wire recycling according to the concept of this invention is presented in a side view:.

The method of recovering wire from waste tires consists in cutting the tires by using cutting equipment 1 and grinding them by means of grinding 3 devices. Afterwards, the reinforcement wires are segregated from other elements of the tire by means of the conveyor belt 4 equipped with a magnetic 5 separator, and put once more into the grinding device where the adhering rubber fragments are removed from the surface of the steel. The cleaned wires are separated from the rubber elements by the magnetic 5 separator. The wires are then placed on the vibratory 6 conveyor where the steel is heat-treated. The surface of the vibratory conveyor is heated up by a system 8 of gas burners to this end. Afterwards, the wires are mechanically cleaned in the cleaning 7 device and separated from loose non-metal elements. The wires are subsequently placed on the conveyor 10 belt equipped with a magnetic drum, where they are detached from other metal elements. Then the wires are transported on the conveyor 11 to the hydraulic 12 press equipped with an inductor 13 which heats up the compressed material.

The design of the recycling plant for recovering the steel wires from waste tires featuring conveyors, cutting and grinding devices and a magnetic separator. It consists of a network of tire cutting devices linked to the tire grinding 1 device by means of the conveyor belt 2 attached to the grinding 3 device. This is connected to the conveyor 4 belt fitted with the magnetic 5 separator. The reinforcement wires which are first segregated by - and stored inside - the magnetic separator 5 are then placed on the conveyor 2 belt once more in order to be transported back to the grinding 3 device. Subsequently, the ground material is placed on the conveyor 4 belt equipped with the magnetic 5 separator, whereas the freed wires segregated by the separator 5 are transported onto the vibratory 6 conveyor, the surface of which is heated by a system 8 of gas burners, where the wires are subjected to heat treatment, and are mechanically cleaned afterwards by means of the cleaning 7 device, linked with the vibratory 8 conveyor, and equipped with a rotor with pivotally connected blades, as well as another system of blades installed in a circular arrangement inside its casing 9 and a number of small-diameter holes in its bottom part. The cleaned wires are then placed on the conveyor 10 belt, that is linked with the outlet of the cleaning 7 device and which is fitted with a magnetic drum. Here, the free steel wire is segregated from the non-metal elements. Afterwards, the freed wires are transported on a conveyor 11 to the hydraulic 12 press equipped with an inductor 13 which heats up the compressed material.

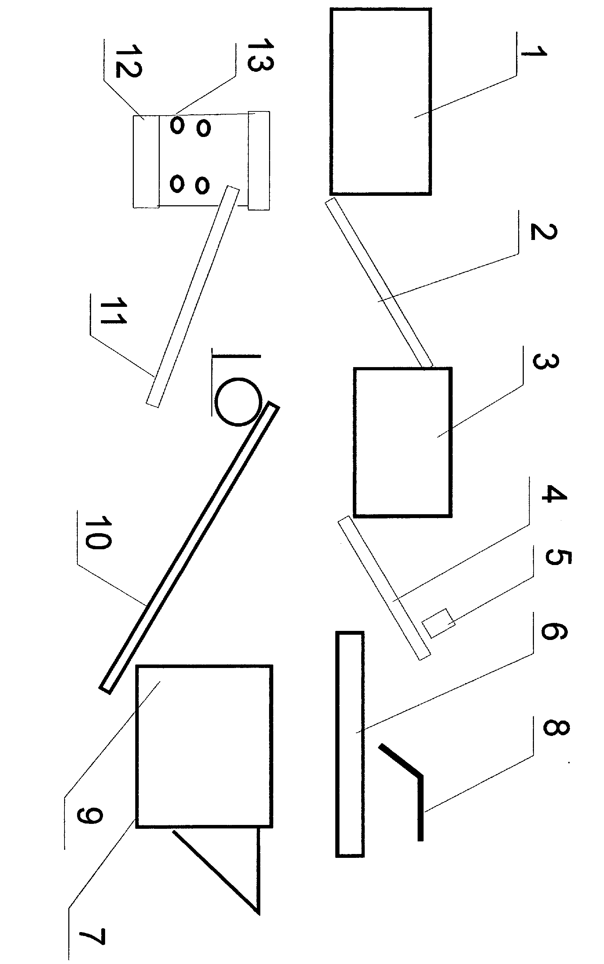

## Claims

1. The characteristic feature of the presented method of recycling wires from waste tires is that the wires are first recovered from the tires by means of cutting 1 equipment and transported by the conveyor 2 belt to the grinding 3 device, where they are ground and then placed on the conveyor 4 belt equipped with the magnetic 5 separator in order to be segregated from other elements of the tire; afterwards, the freed wires are put back into the grinding 3 device and then separated from other remaining elements of the tire by means of the magnetic 5 separator, placed onto the vibratory 6 conveyor, where the wires are subjected to heat treatment by using a system 8 of gas burners, and mechanically cleaned afterwards by means of a cleaning 7 device which contains a rotor with pivotally connected blades, and another system of blades that are installed in circular arrangement inside its casing 9 which has a number of small-diameter holes in its bottom part. The cleaned wires are then segregated from other elements of the tire by way of the conveyor 10 belt fitted with a magnetic drum, and are finally transported on a conveyor belt 11 to the hydraulic 12 press which heats up the compressed material with an inductor 13.-/-

2. The characteristic feature of the design of the recycling plant for recovering wires from waste tires equipped with conveyors, cutting and grinding devices and magnetic separators, is that the grinding 3 device is linked through the conveyor 4 belt, fitted with the magnetic 5 separator, to the vibratory 6 conveyor, the surface of which is heated up by a system 8 of gas burners, and then to the cleaning 7 device equipped with a rotor with pivotally connected blades, as well as another system of blades installed in circular arrangement inside its casing 9, and a number of small-diameter holes in its bottom part; the outlet of the cleaning 7 device is connected to the conveyor 10 belt fitted with a magnetic drum and then to the conveyor 11, which is attached to the hydraulic 12 press equipped with an inductor 13 that heats up the compressed material.-/-
